# EUROPÄISCHE PATENTSCHRIFT

(11) **EP 1 818 589 B1**
(45) Veröffentlichungstag und Bekanntmachung des Hinweises auf die Patenterteilung: **06.08.2014**
(21) Anmeldenummer: 07002675.2
(22) Anmeldetag: 08.02.2007
(51) Int. Cl.: F16L 17/035, F16L 21/03, F16J 15/02

(54) **Dichtring und Dichtungsvorrichtung mit dem Dichtring**
Sealing ring and sealing device with the sealing ring
Bague d'étanchéité et dispositif d'étanchéité avec la bague

(30) Priorität: 10.02.2006 AT 2062006
(43) Veröffentlichungstag der Anmeldung: 15.08.2007
(73) Patentinhaber: Semperit Aktiengesellschaft Holding, 1031 Wien (AT)
(72) Erfinder: Miessbacher, Herwig, Grosslobming 8734 (AT)
(74) Vertreter: Ofner, Clemens

(56) Entgegenhaltungen:
- EP-A2- 0 243 331
- EP-A2- 1 467 137
- US-A- 2 230 725
- US-A- 3 837 687

## Beschreibung

Die Erfindung betrifft einen Dichtring, wie er im Oberbegriff des Anspruches 1 beschrieben ist sowie eine Dichtungsvorrichtung, wie sie im Oberbegriff des Anspruches 20 beschrieben ist.

Aus der CH 406 757 ist eine Rohrverbindung zwischen einem Muffenteil eines Rohres und eines in den Muffenteil einragenden Spitzendes eines weiteren Rohres und mit einem, in einer dem Spitzende zugewandten umlaufenden Aufnahmenut des Muffenteils eingesetzten elastischen Dichtring bekannt. Der Dichtring ist aus zwei elastischen Teilen verschiedener Härte gebildet, wobei ein härterer O-Ring von einem weichen Profilring vollständig umschlossen ist und ein an der Außenseite des Profilringes vorhandener Ringwulst zwischen dem O-Ring und der Wand der Aufnahmenut liegt.

Aus einem weiteren Dokument, DE 103 06 316 A1 ist eine Muffenrohrverbindung bekannt, bei der in einer umlaufenden Aufnahmenut der Nut der Muffe ein das in die Muffe eingeführte Einsteckende eines Rohres dichtend umfassender Dichtring angeordnet ist, der einstückig aus einem, auf eine Geometrie der Aufnahmenut abgestimmten Haltebereich und einen Dichtbereich aufweist, wobei der Dichtbereich eine geringere Härte aufweist, als der Haltebereich und ist aus diesem Dokument ebenfalls eine Ausbildung des Dichtbereiches mit einem schwalbenschwanartigen Querschnitt am freien Ende bekannt.

Aus dem Dokument DE 10 2004 038 333 A1 ist ein Dichtring für Steckmuffenverbindungen bekannt, der aus hochwertigem, elastomeren Kunststoff oder einem Elastomer als Teilelement besteht, das ein durch den Dichtwerkstoff mindestens teilweise umschlossenes Endstück am Dichtungsanfang als Kern aus einem härteren Kunststoff, wie PP, aufweist, das ein Basiselement bildet, das einstückig mit einem dichtlippenausbildenden Dichtelement aus unterschiedlichen, eine geringe Härte aufweisenden Dichtelement verbunden ist und dass in den Dichtwerkstoff ein Gleitmittel eingelagert ist, dass an der Oberfläche einen Gleitfilm ausbildet.

Die EP 0 243 331 A2 beschreibt einen Form- und Dichtring zum Bilden eines Formungselementes bei der Bildung eines Muffenendes an einem Rohr aus thermoplastischem Material und zum Abdichten eines Zwischenraums in einer Rohrverbindung zwischen dem Muffenende und dem glatten Ende eines Rohres, das in das Muffenende eingeführt ist. Der Form- und Dichtring besteht aus einem ringförmigen Dichtabschnitt, bestehend aus elastisch nachgiebigen Dichtungsmaterial, und einem zweiten, im Wesentlichen ringförmigen Bereich für die Verstärkung des Form- und Dichtringes aus einem Material, das starr ist in Bezug auf das elastisch nachgiebige Dichtungsmaterial, und das mit dem elastisch nachgiebigen Material verbunden ist. Das Verstärkungsmaterial weist schlitzförmige Ausnehmungen auf. Die hier beschriebene Anordnung entspricht dem Dichtring nach dem Oberbegriff des Anspruchs 1.

Aufgabe der Erfindung ist es eine Dichtungsvorrichtung für eine Muffenrohrverbindung zu schaffen, die eine hohe Dichtheit durch ein einen Dichtungsquerschnitt anpassbares Dichtelement gewährleistet und einer durch Druckbelastung bedingten Umformung einen hohen Umformwiderstand entgegen setzt.

Diese Aufgabe der Erfindung wird durch die im Kennzeichenteil des Anspruches 1 wiedergegeben Merkmalen erreicht. Der Vorteil dabei ist, dass der eine höhere Festigkeit aufweisende Stützring durch die keilförmige und mit durch das Material des Dichtelements durchsetzenden Aussparungen eine die Montage in eine nutförmige Aufnahme des Muffenteils vereinfachende radiale Flexibilität, bei einer hohen axialen Abstützkraft im Dichtungsspalt, erreicht wird.

Die mäanderartige Ausbildung des Stützringes, die durch die gegeneinander versetzte Anordnung der Aussparungen erreicht wird, gewährleistet trotz höherer Festigkeit des für den Stützring verwendeten Materials eine gewisse radial Elastizität, die für das Einbringen des Dichtringes in eine Aufnahmenut einer Verbindungsmuffe einer steckbaren und druckdichten Dichtungsvorrichtung von Vorteil ist.

Vorteilhaft sind dabei auch Ausbildungen nach den Ansprüchen 2 bis 6, weil dadurch die eine Montage vereinfachende Eigenschaft des Stützringes und eine hohe Stützfunktion bei axialer Belastung gleichermaßen durch Wahl der Art und Anordnung der Aussparungen gleichermaßen erreicht wird.

Vorteilhafte Weiterbildungen kennzeichnen auch die Ansprüche 7 bis 9, wodurch auf den Anwendungsfall, insbesondere auf ein auszulegendes Druckniveau, abgestimmte Dichtringe erreicht werden.

Möglich sind aber auch Ausbildungen nach den Ansprüchen 10 und 11, wodurch eine sichere Verbindung zwischen den Komponenten des Dichtringes erreicht wird.

Vorteilhaft ist aber auch eine Weiterbildung nach Anspruch 12 zur Erzielung eines höheren verformbaren Querschnitts des Dichtelements für die Dichtfunktion.

Durch die in den Ansprüchen 13 und 14 gekennzeichneten vorteilhaften Weiterbildungen wird die Dichtwirkung in Abhängigkeit vom Druckniveau wirksam.

Gemäß der im Anspruch 15 beschriebenen Ausbildung werden mehrere Dichtabschnitte erreicht.

Vorteilhaft sind aber auch Ausbildungen nach den Ansprüchen 16 und 17, wodurch ein Freiraum für die Verformung des Dichtelements und damit eine sichere Dichtfunktion erreicht wird.

Gemäß der vorteilhaften Ausbildung wie sie im Anspruch 18 beschrieben ist wird ein hoch elastisches und dauerhaftes Dichtelement erreicht.

Schließlich ist aber auch die im Anspruch 19 gekennzeichnete Ausbildung vorteilhaft, weil dadurch eine hohe Verformungsfestigkeit bei geringen Außenabmessungen erreicht wird.

Die Aufgabe der Erfindung wird aber auch durch eine Dichtungsvorrichtung, wie sie im Anspruch 20 gekennzeichnet ist, gelöst. Der Vorteil dabei ist, dass eine hohe dauerhafte Dichtwirkung bei geringen Abmaßen für die Dichtvorrichtung erreicht wird. Der keilförmige Stützring bewirkt einen hohen Widerstand gegen einem druckbedingten Austreiben der Dichtungsvorrichtung aus der Aufnahmenut und gewährleistet andererseits durch die radiale Elastizität des Stützringes infolge der schlitzförmigen Aussparungen eine vereinfachte Montage der Dichtverbindung.

Zum besseren Verständnis der Erfindung wird diese anhand der in Figuren dargestellten Ausführungsbeispielen näher erläutert.

Es zeigen:
- Fig. 1: einen Dichtring einer Dichtvorrichtung in Ansicht;
- Fig. 2: den Dichtring geschnitten gemäß den Linien II-II in Fig. 1;
- Fig. 3: ein Detail des Dichtringes, geschnitten;
- Fig. 4: eine Dichtvorrichtung, geschnitten;
- Fig. 5: eine andere Ausbildung des Dichtringes, geschnitten.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen.

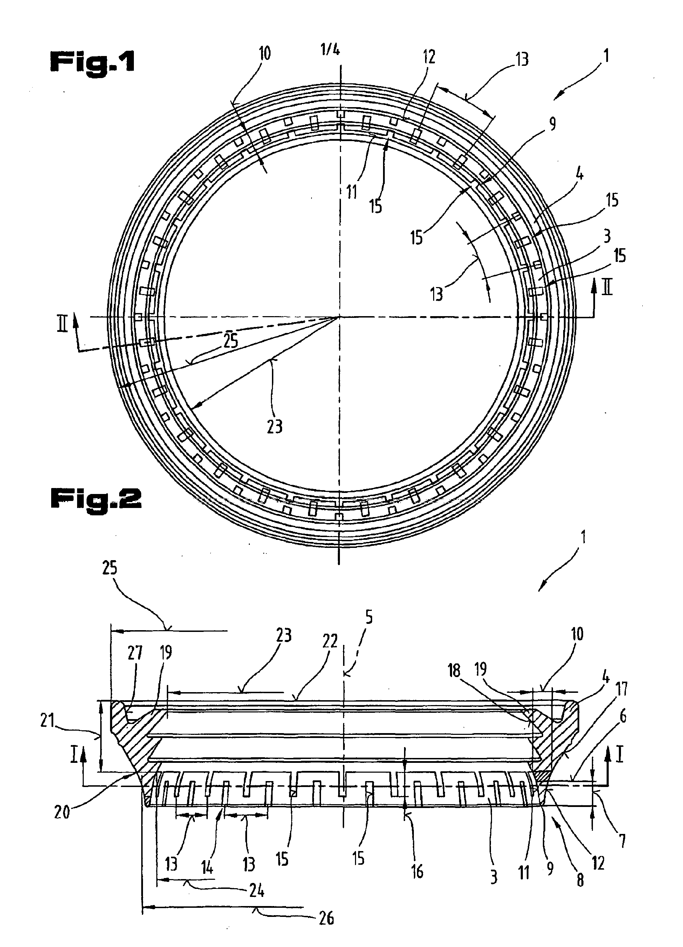

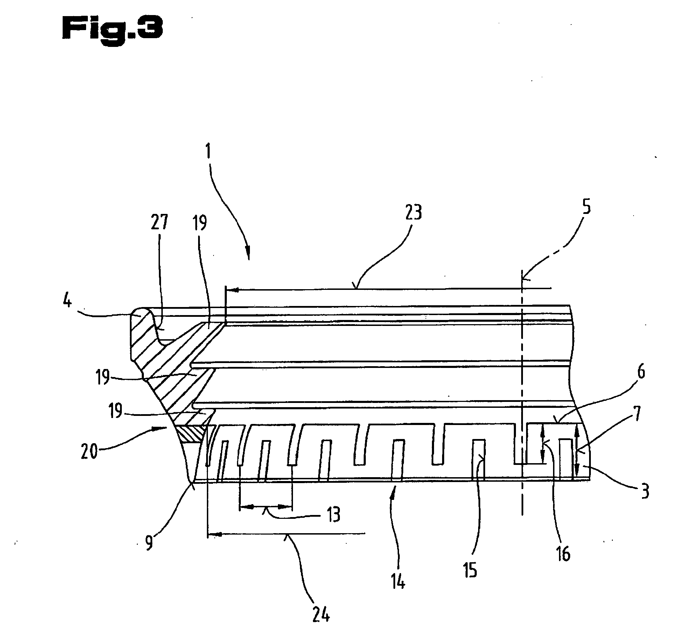

In den Fig. 1 bis 3 ist ein Dichtring 1, insbesondere für eine steckbare Muffenrohrverbindung 2, bestehend aus einem keilförmigen Stützring 3 und einem mit diesem verbundenen, ringförmigen Dichtelement 4 gezeigt.

Der Stützring 3 weist in einer, eine Längsmittelachse 5 aufnehmenden Ebene einen etwa keilförmigen Querschnitt auf, der im gezeigten Ausführungsbeispiel eine ringförmige Basisfläche 6 in einer zur Längsmittelachse 5 senkrechten Ebene ausbildet. In einer parallel zur Längsmittelachse 5 vorgesehenen Ringbreite 7 bildet ein Scheitelbereich 8 eine ringförmig umlaufende Stirnkante 9 aus, durch, ausgehend von einer Breite 10 der Basisfläche 6 konisch aufeinander zulaufenden Innenseitefläche 11 und Außenseitenfläche 12 des Stützringes 3. Selbstverständlich kann die Basisfläche 6 auch in Form einer Kegelmantel- Ringfläche ausgebildet sein, wodurch eine größere Verbindungsfläche zwischen dem Stützring 3 und dem mit diesem thermisch oder durch Klebung verbundenen Dichtelement 4 geschaffen wird.

In der Basisfläche 6 und im Scheitelbereich 8 sind nach dem gezeigten Ausführungsbeispiel in Umfangsrichtung des Stützringes 3 in einem etwa gleichmäßigen Teilungsabstand 13 Aussparungen 14 angeordnet, die von der Basisfläche 6 in Richtung der Stirnkante 9 und um einen halben Teilungsabstand versetzt von der Stirnkante 9 in Richtung der Basisfläche 6 in den Stützring 3 einragend angeordnet sind.

Bevorzugt sind die Aussparungen 14 durch im Bezug auf die Längsmittelachse 5 radial verlaufende Schlitze 15 gebildet, wobei eine Schlitztiefe 16 bevorzugt größer ist als die halbe Ringbreite 7, wodurch sich die Schlitze 15 überlappen und wodurch der Stützring 3 einen mäanderförmigen Materialverlauf in Ringform aufweist. Die Schlitze 15 queren den Querschnitt des Stützringes 3 zwischen der Innenseitenfläche 11 und der Außenseitenfläche 12.

Das Dichtelement 4 des Dichtringes 1 ist an der Basisfläche 6 am Stützring 3 befestigt und weist ausgehend von der Breite 10 der Basisfläche 6 einen sich konisch erweiternden Querschnitt auf, wobei eine Außenkontur 17 in Form einer Kegelmantelfläche verläuft und eine Innenkontur 18 durch zumindest einen ringförmig umlaufenden, in Richtung der Längsmittelachse 5 ragenden Spreizlippenring 19 gebildet ist.

Bevorzugt sind, wie im Ausführungsbeispiel gezeigt, zwischen einem Verbindungsbereich 20 des Dichtelements 4 mit dem Stützring 3 und einer davon in einer Höhe 21 distanzierten Stirnfläche 22 des Dichtelements 4 drei derartige, in Richtung der Längsmittelachse 5 ringförmig vorragende Spreizlippenringe 19 vorgesehen, wobei ein von diesen gebildeter Innendurchmesser 23 des Dichtelements 4 kleiner ist als ein Innendurchmesser 24 der Basisfläche 6 des Stützringes 3. Ein Außendurchmesser 25 des Dichtelements 4 an der Stirnfläche 22 ist größer als ein Außendurchmesser 26 der Basisfläche 6 des Stützringes 3.

Das Dichtelement 4 ist an der Stirnfläche 22 zur Ausformung des Spreizlippenringes 19 und zur Erhöhung dessen radialer Elastizität mit einer ringförmig umlaufenden Nut 27 versehen.

Der Stützring 3 und das Dichtelement 4 sind, wie bereits erwähnt, im Verbindungsbereich 20 bewegungsfest miteinander verbunden, wobei diese Verbindung bevorzugt durch eine thermische Verbindung, insbesondere durch eine Fertigung in einem so genannten 2K-Spritzgießverfahren, erreicht wird.

Nach einer bevorzugten Ausbildung ist der Stützring 3 aus einem Kunststoffmaterial, z.B. aus PE, PP, PA, PS, PES, PEEK, TPEs etc., faserverstärkten Kunststoff oder Hartgummi, mit einer Shore-Härte von 90 ShA bis 80 ShD, bevorzugt 50 ShD, gebildet, während das Dichtelement 4 eine höhere Elastizität aufweist und bevorzugt aus vernetzten Elastomeren z.B. NR, SBR, EPDM, NBR und TPEs, gebildet ist und eine Shore-Härte zwischen 40 ShA bis 80 ShA, bevorzugt 50 ShA bis 60 ShA, beträgt.

Das oben beschriebene Verfahren gewährleistet weiter beim Aufspritzen des Dichtelements 4 auf den Stützring 3, der in einer Form gehaltert ist, ein Auffüllen der in der Basisfläche 6 des Stützringes 3 angeordneten Aussparungen 14 und damit einen Verzahnungseffekt im Verbindungsbereich 20 und wird damit eine sichere Verbindung zwischen dem Stützring 3 und dem Dichtelement 4 erreicht.

Selbstverständlich ist aber auch eine Verbindung des Stützringes 3 mit dem Dichtelement 4 durch eine Verklebung im Verbindungsbereich 20 möglich.

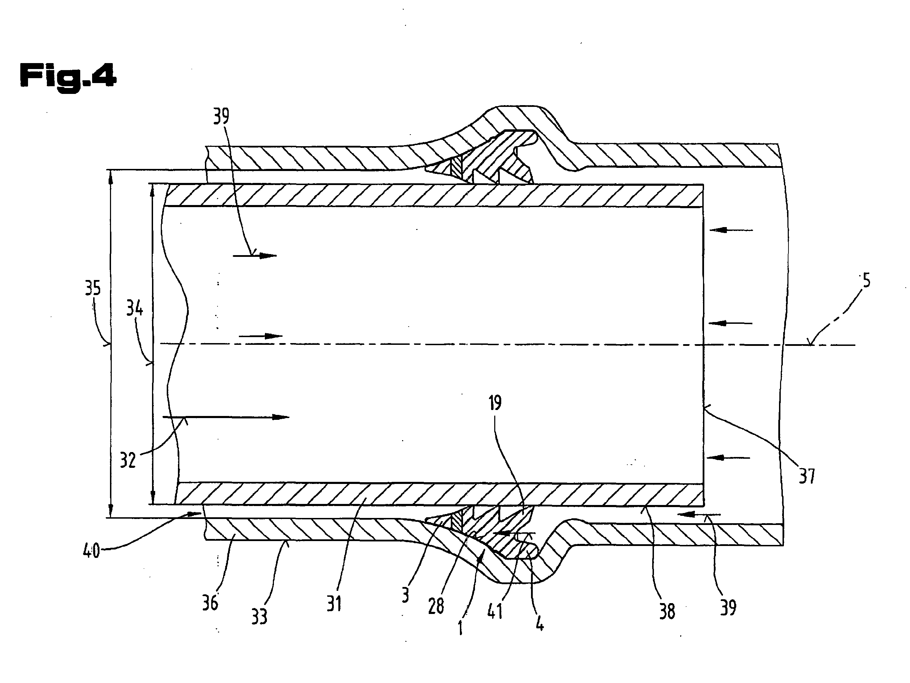

Die mäanderartige Ausbildung des Stützringes 3, die durch die gegeneinander versetzte Anordnung der Aussparungen 14 erreicht wird, gewährleistet trotz höherer Festigkeit des für den Stützring 3 verwendeten Materials eine gewisse radial Elastizität, die für das Einbringen des Dichtringes 1 in eine der Fig. 4 zu entnehmenden Aufnahmenut 28 einer Verbindungsmuffe 29 einer steckbaren und druckdichten Dichtungsvorrichtung 30.

Im gezeigten Ausführungsbeispiel ist ein Rohr 31 in die mit dem Dichtring 1, in der dem Rohr 31 zugewandten Aufnahmenut 28, versehenen Verbindungsmuffe 29 in Steckrichtung - gemäß Pfeil 32 - eingeführt, wobei sich die Spreizlippenringe 19, drei im gezeigten Ausführungsbeispiel, durch elastische Verformung an eine Umfangsfläche 33 des Rohres 31 dichtend anlegen. Dies wird dadurch erreicht, dass ein Außendurchmesser 34 des Rohres 31 größer ist, als der Innendurchmesser 23 der Spreizlippenringe 19 im unverformten Zustand. Ein Innendurchmesser 35 eines Rohransatzes 36 ist gering größer, als der Außendurchmesser 34 des Rohres 31. Zum Einführen des Rohres 31 ist von einem Stirnende 37 des Rohres 31 ausgehend eine kegelmantelförmig verlaufende Spreizfläche 38 vorgesehen.

Die Aufnahmenut 28 ist der Querschnittsausbildung des Dichtringes 1 mit dem dreikantförmigen Stützring 3 und dem konisch erweiterten Profil des Dichtelements 4 angepasst.

Sobald in einem derartigen Verbindungssystem ein Betriebsdruck - gemäß Pfeile 39-herrscht, kommt es durch die Ausgestaltung der Spreizlippenringe 19 zu einer Aufspreizung, womit sich die Dichtwirkung des Dichtringes 1 am Rohr 31 bzw. dessen Umfangsfläche 33 verstärkt.

Ein Auspressen des Dichtringes 1 durch einen, aus der Differenz zwischen dem Innendurchmesser 35 des Rohransatzes 36 und dem Außendurchmesser 34 des Rohres 31 bestehenden Dichtspalt 40 wird durch die Stützkraft des die höhere Festigkeit aufweisenden Stützringes 3 wirkungsvoll verhindert. Bei Auftreten einer Kraft - gemäß Pfeil 41 - auf den Dichtring 1 durch den Systemdruck - gemäß Pfeil 39 - wird der Stützring 3 infolge der Keilform in den Dichtspalt 40 eingepresst wobei eine kraftschlüssige Anlage sowohl an der Wand der Aufnahmenut 28 wie auch durch radiale Kontraktion am Rohr 31 entsteht und dadurch das elastische Dichtelement 4 gestützt wird.

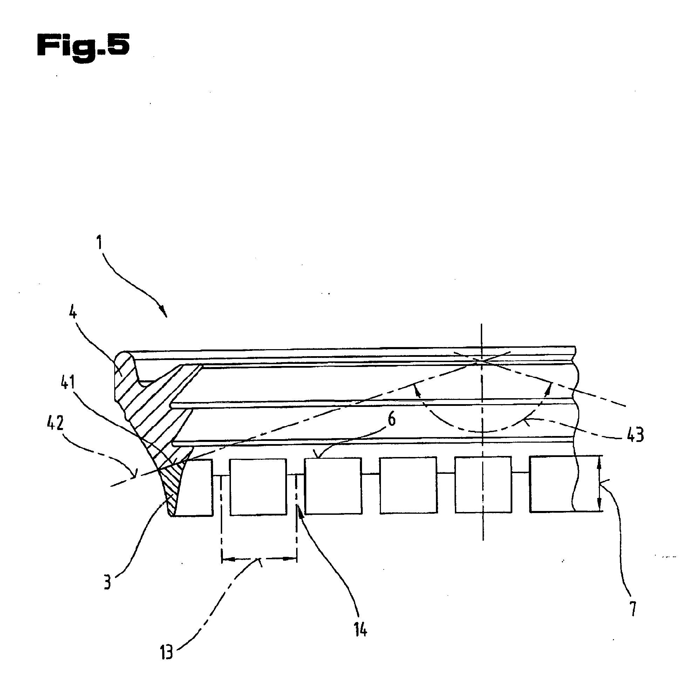

In der Fig. 5 ist eine andere Ausbildung des Dichtringes 1, bestehend aus dem Stützring 3 und dem Dichtelement 4 gezeigt. Nach dieser Ausbildung verläuft die Basisfläche 6, welche eine Verbindungsfläche 41 zwischen dem Stützring 3 und dem Dichtelement 4 ausbildet als Ringfläche längs einer Kegelmantelfläche 42. Ein Spitzenwinkel 43 ist beispielsweise zwischen 60 Grad und 120 Grad ausgebildet. Dies ergibt eine Vergrößerung der Verbindungsfläche 41. Wie bereits erwähnt kann die Verbindung zwischen dem Stützring 3 und dem Dichtelement thermisch z.B. durch ein so genanntes 2K- Spritzverfahren oder Schweißung erfolgen oder aber durch Verklebung.

Weiter sind nach diesem Ausführungsbeispiel die in dem Teilungsabstand 13 im Stützring 3 angeordneten schlitzförmigen Aussparungen 14 über die gesamte Ringbreite 7 erstreckend ausgebildet wodurch eine erhöhte Flexibilität des Stützringe führt wodurch das Einlegen des Dichtringes in die Aufnahmenut einer Muffe, eines Rohres etc. wesentlich erleichtert wird.

Sämtliche Angaben zu Wertebereichen in gegenständlicher Beschreibung sind so zu verstehen, dass diese beliebige und alle Teilbereiche daraus mitumfassen, z.B. ist die Angabe 1 bis 10 so zu verstehen, dass sämtliche Teilbereiche; ausgehend von der unteren Grenze 1 und der oberen Grenze 10 mitumfasst sind, d.h. sämtliche Teilbereich beginnen mit einer unteren Grenze von 1 oder größer und enden bei einer oberen Grenze von 10 oder weniger, z.B. 1 bis 1,7, oder 3,2 bis 8,1 oder 5,5 bis 10.

Die Ausführungsbeispiele zeigen mögliche Ausführungsvarianten des Dichtringes bzw. der Dichtvorrichtung wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt. Es sind also auch sämtliche denkbaren Ausführungsvarianten, die durch Kombinationen einzelner Details der dargestellten und beschriebenen Ausführungsvariante möglich sind, vom Schutzumfang mitumfasst.

Der Ordnung halber sei abschließend darauf hingewiesen, dass zum besseren Verständnis des Aufbaus des Dichtringes bzw. der Dichtvorrichtung deren Bestandteile teilweise unmaßstäblich und/oder vergrößert und/oder verkleinert dargestellt wurden.

### Bezugszeichenaufstellung

- 1: Dichtring
- 2: Muffenrohrverbindung
- 3: Stützring
- 4: Dichtelement
- 5: Längsmittelachse

- 6: Basisfläche
- 7: Ringbreite
- 8: Scheitelbereich
- 9: Stirnkante
- 10: Breite

- 11: Innenseitenfläche
- 12: Außenseitenfläche
- 13: Teilungsabstand
- 14: Aussparung
- 15: Schlitz

- 16: Schlitztiefe
- 17: Außenkontur
- 18: Innenkontur
- 19: Spreizlippenring
- 20: Verbindungsbereich

- 21: Höhe
- 22: Stirnfläche
- 23: Innendurchmesser
- 24: Innendurchmesser
- 25: Außendurchmesser

- 26: Außendurchmesser
- 27: Nut
- 28: Aufnahmenut
- 29: Verbindungsmuffe
- 30: Dichtungsvorrichtung

- 31: Rohr
- 32: Pfeil
- 33: Umfangsfläche
- 34: Außendurchmesser
- 35: Innendurchmesser

- 36: Rohransatz
- 37: Stirnende
- 38: Spreizfläche
- 39: Pfeil
- 40: Dichtspalt

- 41: Verbindungsfläche
- 42: Kegelmantelfläche
- 43: Spitzenwinkel

## Patentansprüche

1. Dichtring (1), insbesondere für eine steckbare Muffenrohrverbindung, mit einem elastischen, ringförmigen, zumindest einen Spreizlippenring aufweisenden Dichtelement (4) und mit einem, mit dem Dichtelement (4) verbundenen, eine gegenüber dem Dichtelement (4) geringere Elastizität aufweisenden Stützring (3), wobei der Stützring (3) in einer, eine Längsmittelachse (5) des Dichtrings (1) aufnehmenden Ebene einen keilförmigen Querschnitt aufweist und an einer ringförmigen, in einer zur Längsmittelachse (5) winkelig verlaufenden Basisfläche (6) mit dem Dichtelement (4) verbunden ist und wobei in einer parallel zur Längsmittelachse (5) verlaufenden Distanz zur Basisfläche (6), die einer Ringbreite (7) des Stützrings (3) entspricht, ein Scheitelbereich (8) des Stützrings (3) eine umlaufende Stirnkante (9) ausbildet und wobei an der Basisfläche (6) und im Scheitelbereich (8) in Umfangsrichtung in einem Abstand (13) zueinander Aussparungen (14) angeordnet sind, **dadurch gekennzeichnet, dass** die Aussparungen (14) durch wechselweise von der Basisfläche (6) in Richtung der Stirnkante (9) und von der Stirnkante (9) in Richtung der Basisfläche (6) sich erstreckende, in Bezug auf die Längsmittelachse (5) radial verlaufende Schlitze (15) gebildet sind, sodass der Stützring (3) mäanderförmig ausgebildet ist.

2. Dichtring (1) nach Anspruch 1, **dadurch gekennzeichnet, dass** die Basisfläche (6) in einer zur Längsmittelachse (5) in einem rechten Winkel ausgerichteten Ebene verläuft.

3. Dichtring (1) nach Anspruch 1, **dadurch gekennzeichnet, dass** die Basisfläche (6) als Ringfläche einer Kegelmantelfläche (42) ausgebildet ist.

4. Dichtring (1) nach einem der vorhergehenden Ansprüche, **dadurch gekennzeichnet, dass** die Aussparungen (14) in einem gleichmäßigen Teilungsabstand (13) angeordnet sind.

5. Dichtring (1) nach einem der vorhergehenden Ansprüche, **dadurch gekennzeichnet, dass** die Aussparungen (14) in Scheitelbereich (8) zu den in der Basisfläche (6) angeordneten Aussparungen (14) um den halben Teilungsabstand (13) versetzt angeordnet sind.

6. Dichtring (1) nach einem der vorhergehenden Ansprüche, **dadurch gekennzeichnet, dass** eine Schlitztiefe (16) bevorzugt größer ist als die halbe Distanz zwischen der Basisfläche (6) und der Stirnkante (9).

7. Dichtring (1) nach einem der vorhergehenden Ansprüche, **dadurch gekennzeichnet, dass** das Dichtelement (4) an der Basisfläche (6) des Stützringes (3) befestigt ist, insbesondere über ein chemisches Haftmittel.

8. Dichtring (1) nach einem der vorhergehenden Ansprüche 1 bis 6, **dadurch gekennzeichnet, dass** das Dichtelement (4) mit dem Stützring (3) thermisch verbunden ist.

9. Dichtring (1) nach einem der vorhergehenden Ansprüche 1 bis 6, **dadurch gekennzeichnet, dass** das Dichtelement (4) und der Stützring (3) durch einen einstückigen Verbundbauteil, bevorzugt durch 2K- Spritzgießen gebildet ist.

10. Dichtring (1) nach einem der vorhergehenden Ansprüche, **dadurch gekennzeichnet, dass** die Aussparungen (14) in der Basisfläche (6) einen zahnartigen Verbindungsbereich (20) zwischen dem Stützring (3) und dem Dichtelement (4) ausbilden.

11. Dichtring (1) nach einem der vorhergehenden Ansprüche, **dadurch gekennzeichnet, dass** die Aussparungen (14) in der Basisfläche (6) des Stützringes (3) vom Material des Dichtelementes (4) durchsetzt sind.

12. Dichtring (1) nach einem der vorhergehenden Ansprüche, **dadurch gekennzeichnet, dass** das Dichtelement (4) mit dem Spreizlippenring (19) in der die Längsmittelachse (5) aufnehmenden Ebene einen keilförmigen Querschnitt ausbildet.

13. Dichtring (1) nach einem der vorhergehenden Ansprüche, **dadurch gekennzeichnet, dass** das Dichtelement (4) in einer dem Stützring (3) entgegen gesetzten, in einer zu einer die Basisfläche (6) aufnehmenden, senkrecht zur Längsmittelachse (5) verlaufenden Ebene, ausgebildeten Stirnfläche (22) mit einer unlaufenden v-förmigen Nut (27) versehen ist.

14. Dichtring (1) nach einem der vorhergehenden Ansprüche, **dadurch gekennzeichnet, dass** der Spreizlippenring (19) in der die Stirnfläche (22) aufnehmenden Ebene, ringförmig umlaufend, der Längsmittelachse (5) zugewandt am Dichtelement (4) angeordnet, insbesondere angeformt ist.

15. Dichtring (1) nach einem der vorhergehenden Ansprüche, **dadurch gekennzeichnet, dass** zwischen dem in der Ebene der Stirnfläche (22) ausgebildeten Spreizlippenring (19) und der Basisfläche (6) des Stützringes (3) in zumindest einer parallel verlaufenden Zwischenebene ein weiterer, eine Innenkontur (18) des Dichtelements (4) in Richtung der Längsmittelachse (5) überragender ringförmig umlaufender Spreizlippenring (19) angeordnet ist.

16. Dichtring (1) nach einem der vorhergehenden Ansprüche, **dadurch gekennzeichnet, dass** ein Innendurchmesser (23) des Spreizlippenringes (19) kleiner ist als ein Innendurchmesser (24) des Stützringes (3).

17. Dichtring (1) nach einem der vorhergehenden Ansprüche, **dadurch gekennzeichnet, dass** ein Außendurchmesser (25) des Dichtelementes (4) größer ist als ein Außendurchmesser (26) des Stützringes (3).

18. Dichtring (1) nach einem der vorhergehenden Ansprüche, **dadurch gekennzeichnet, dass** das Dichtelement (4) aus einem vernetzten Elastomer, z.B. NR, SBR, EPDM, NBR und TPEs, gebildet ist und eine Shore- Härte zwischen 40 ShA und 80 ShA, bevorzugt zwischen 50 ShA und 60 ShA, aufweist.

19. Dichtring (1) nach einem der vorhergehenden Ansprüche, **dadurch gekennzeichnet, dass** der Stützring (3) aus einem Kunststoffmaterial, z.B. PE, PP, PA, PS, PES, PEEK, TPEs oder faserverstärktem Kunststoff oder Hartgummi gebildet ist und eine Shore- Härte von 90 ShA bis 80ShD, bevorzugt 50 ShD, aufweist.

20. Dichtungsvorrichtung (30), insbesondere eine steckbare Muffenrohrverbindung (2), mit einem in einer Aufnahmenut (28) einer Muffe, z.B. Rohrmuffe, Armaturanschlussmuffe, angeordneten, aus unterschiedlichen Materialien, insbesondere aus Kunststoff, bestehenden Dichtring (1) mit zumindest einem, einen Spitzende eines in die Muffe dichtend einragenden Rohres (31) umfassenden Spreizlippenring, **dadurch gekennzeichnet, dass** der Dichtring (1) nach einem der Ansprüche 1 bis 19 ausgebildet ist.

## Claims

1. Sealing ring (1), in particular for a pluggable socket pipe connection (2), having an elastic, annular sealing element (4) with at least one spreading lip ring and a supporting ring (3) connected to the sealing element (4) and having a lower elasticity as compared to the sealing element (4), and the supporting ring (3) has a wedge-shaped cross-section in a plane incorporating a central longitudinal axis (5) of the sealing ring (1), and is connected to the sealing element (4) at an annular base surface (6) extending at an angle to the central longitudinal axis (5), and at a distance to the base surface (6) which distance extends parallel with the central longitudinal axis (5) and corresponds to a ring width (7) of the supporting ring (3), a crest region (8) of the supporting ring (3) forms a circumferentially extending front edge (9), and recesses (14) are arranged in circumferential direction at a distance (13) to one another at the base surface (6) and in the crest region (8), **characterized in that** the recesses (14) are formed from slots (15) extending alternately from the base surface (6) in direction of the front edge (9) and from the front edge (9) in direction of the base surface (6), which slots (15) run radial with respect to the central longitudinal axis (5), so that the supporting ring (3) is embodied to have a meandering course.

2. Sealing ring (1) according to claim 1, **characterized in that** the base surface (6) extends in a plane which is oriented to have a right angle with respect to the central longitudinal axis (5).

3. Sealing ring (1) according to claim 1, **characterized in that** the base surface (6) is embodied as ring surface of a cone shell surface (42).

4. Sealing ring (1) according to one of the preceding claims, **characterized in that** the recesses (14) are arranged at a uniform spacing distance (13).

5. Sealing ring (1) according to one of the preceding claims, **characterized in that** the recesses (14) in the crest region (8) are arranged to be offset by half a spacing distance (13) with respect to the recesses (14) arranged in the base surface (6).

6. Sealing ring (1) according to one of the preceding claims, **characterized in that** a slot depth (16) is preferably greater than the half of the distance between the base surface (6) and the front edge (9).

7. Sealing ring (1) according to one of the preceding claims, **characterized in that** a sealing element (4) is fixed to the base surface (6) of the supporting ring (3), in particular by means of a chemical adhesive agent.

8. Sealing ring (1) according to one of the preceding claims 1 to 6, **characterized in that** the sealing element (4) is thermally connected to the supporting ring (3).

9. Sealing ring (1) according to one of the preceding claims 1 to 6, **characterized in that** the sealing element (4) and the supporting ring (3) are formed from an integral composite component, preferably by 2K injection molding.

10. Sealing ring (1) according to one of the preceding claims, **characterized in that** the recesses (14) in the base surface (6) form a tooth-like connection region (20) between the supporting ring (3) and the sealing element (4).

11. Sealing ring (1) according to one of the preceding claims, **characterized in that** the recesses (14) in the base surface (6) of the supporting ring (3) are interspersed with the material of the sealing element (4).

12. Sealing ring (1) according to one of the preceding claims, **characterized in that** the sealing element (4) with the spreading lip ring (19) forms a wedge-shaped cross-section in the plane containing the central longitudinal axis (5).

13. Sealing ring (1) according to one of the preceding claims, **characterized in that** the sealing element (4) is provided with a circumferential v-shaped groove (27) in a front end face (22), which front end face (22) is in a plane opposite the supporting ring (3) and containing the base surface (6) and extending perpendicular with respect to the central longitudinal axis (5).

14. Sealing ring (1) according to one of the preceding claims, **characterized in that** the spreading lip ring (19) is disposed, in particular formed, at the sealing element (4) annularly circulating in the plane containing the front end face (22) and, facing the central longitudinal axis (5).

15. Sealing ring (1) according to one of the preceding claims, **characterized in that** another spreading lip ring (19) annularly circulating, projecting above an inner contour (18) of the sealing element (4) in direction of the central longitudinal axis (5) is embodied between the spreading lip ring (19) embodied in the plane of the front end face (22) and the base surface (6) of the supporting ring (3) in at least one parallel extending intermediate plane.

16. Sealing ring (1) according to one of the preceding claims, **characterized in that** an inner diameter (23) of the spreading lip ring (19) is smaller than an inner diameter (24) of the supporting ring (3).

17. Sealing ring (1) according to one of the preceding claims, **characterized in that** an outer diameter (25) of the sealing element (4) is greater than an outer diameter (26) of the supporting ring (3).

18. Sealing ring (1) according to one of the preceding claims, **characterized in that** the sealing element (4) is formed from a cross-linked elastomer, such as e.g. NR, SBR, EPDM, NBR and TPEs, and has a shore hardness between 40 ShA and 80 SHA, preferably between 50 ShA and 60 ShA.

19. Sealing ring (1) according to one of the preceding claims, **characterized in that** the supporting ring (3) is formed from a plastic material, such as e.g. PE, PP, PA, PS, PES, PEEK, TPEs or fiber reinforced plastic material or hard rubber and has a shore hardness between 90 ShA and 80 ShD, preferably 50 ShD.

20. Sealing device (30), in particular a pluggable socket pipe connection (2), with a sealing ring (1) arranged in a mounting slot (28) of a sleeve, e.g. a pipe socket, fitting junction box, made of different materials, in particular of plastic material, having at least one spreading lip ring (19) with a spigot of a pipe (31) protruding into the sleeve in a sealing manner, **characterized in that** the sealing ring (1) is designed according to one of claims 1 to 19.

## Revendications

1. Bague d'étanchéité (1), en particulier pour un collier de réparation d'un joint à emboîtement enfichable (2), comprenant un élément d'étanchéité (4) élastique, de forme annulaire, présentant au moins une bague à lèvres d'écartement et comprenant une bague de soutien (3) reliée avec l'élément d'étanchéité (4) présentant une élasticité inférieure à l'élément d'étanchéité (4), étant entendu que la bague de soutien (3) présente dans un plan contenant un axe longitudinal médian (5) de la bague d'étanchéité (1) une section cunéiforme et qu'elle est reliée avec l'élément d'étanchéité (4) au niveau d'une surface de base (6) de forme annulaire s'étendant dans un angle par rapport à l'axe longitudinal médian (5) et étant entendu qu'à une distance de la surface de base (6) s'étendant parallèlement à l'axe longitudinal médian (5) qui correspond à une largeur de bague (7) de la bague de soutien (3), une zone de sommet (8) de la bague de soutien (3) forme une arête frontale circulaire (9) et étant entendu que des évidements (14) sont agencés sur la surface de base (6) et dans la zone de sommet (8) à une distance (13) les uns des autres dans la direction périphérique, **caractérisée en ce que** les évidements (14) sont formés par des fentes (15) s'étendant radialement par rapport à l'axe longitudinal médian (5) orientées, en alternance, depuis la surface de base (6) en direction de l'arête frontale (9) et depuis l'arête frontale (9) en direction de la surface de base (6), de telle sorte que la bague de soutien (3) est réalisée en forme de méandres.

2. Bague d'étanchéité (1) selon la revendication 1, **caractérisée en ce que** la surface de base (6) s'étend dans un plan orienté dans un angle droit par rapport à l'axe médian longitudinal (5).

3. Bague d'étanchéité (1) selon la revendication 1, **caractérisée en ce que** la surface de base (6) est réalisée comme surface annulaire d'une surface de chemise conique (42).

4. Bague d'étanchéité (1) selon l'une des revendications précédentes, **caractérisée en ce que** les évidements (14) sont agencés à une distance de répartition uniforme (13).

5. Bague d'étanchéité (1) selon l'une des revendications précédentes, **caractérisée en ce que** les évidements (14) sont agencés dans la zone du sommet (8) en décalage de la moitié de la distance de répartition (13) par rapport aux évidements (14) agencés dans la surface de base (6).

6. Bague d'étanchéité (1) selon l'une des revendications précédentes, **caractérisée en ce qu'**une profondeur de fente (16) est de préférence plus grande que la moitié de la distance entre la surface de base (6) et l'arête frontale (9).

7. Bague d'étanchéité (1) selon l'une des revendications précédentes, **caractérisée en ce que** l'élément d'étanchéité (4) est fixé sur la surface de base (6) de la bague de soutien (3), en particulier au moyen d'un adhésif chimique.

8. Bague d'étanchéité (1) selon l'une des revendications 1 à 6 précédentes, **caractérisée en ce que** l'élément d'étanchéité (4) est relié avec la bague de soutien (3) de façon thermique.

9. Bague d'étanchéité (1) selon l'une des revendications 1 à 6 précédentes, **caractérisée en ce que** l'élément d'étanchéité (4) et la bague de soutien (3) sont formés au moyen d'un élément composite d'une seule pièce, de préférence au moyen d'un moulage par injection à deux composants.

10. Bague d'étanchéité (1) selon l'une des revendications précédentes, **caractérisée en ce que** les évidements (14) dans la surface de base (6) forment une zone de jonction de forme dentée (20) entre la bague de soutien (3) et l'élément d'étanchéité (4).

11. Bague d'étanchéité (1) selon l'une des revendications précédentes, **caractérisée en ce que** les évidements (14) dans la surface de base (6) de la bague de soutien (3) sont traversés par le matériau de l'élément d'étanchéité (4).

12. Bague d'étanchéité (1) selon l'une des revendications précédentes, **caractérisée en ce que** l'élément d'étanchéité (4) forme une section cunéiforme avec la bague à lèvres d'écartement (19) dans le plan contenant l'axe longitudinal médian (5).

13. Bague d'étanchéité (1) selon l'une des revendications précédentes, **caractérisée en ce que** l'élément d'étanchéité (4) est pourvu d'une rainure circulaire en forme de V (27) dans une surface frontale (22) opposée à la bague de soutien (3) formée dans un plan contenant la surface de base (6) s'étendant perpendiculairement à l'axe longitudinal médian (5).

14. Bague d'étanchéité (1) selon l'une des revendications précédentes, **caractérisée en ce que** la bague à lèvres d'écartement (19) est agencée, et en particulier formée, sur l'élément d'étanchéité (4) dans le plan contenant la surface frontale (22) de façon à s'étendre dans une forme annulaire et dirigée vers l'axe longitudinal médian (5).

15. Bague d'étanchéité (1) selon l'une des revendications précédentes, **caractérisée en ce qu'**entre la bague à lèvres d'écartement (19) formée dans le plan de la surface frontale (22) et la surface de base (6) de la bague de soutien (3), dans au moins un plan intermédiaire s'étendant parallèlement, il est agencé une autre bague à lèvres d'écartement (19) s'étendant de façon périphérique dans une forme annulaire et dépassant un profil intérieur (18) de l'élément d'étanchéité (4) dans la direction de l'axe longitudinal médian (5).

16. Bague d'étanchéité (1) selon l'une des revendications précédentes, **caractérisée en ce qu'**un diamètre intérieur (23) de la bague à lèvres d'écartement (19) est plus petit qu'un diamètre intérieur (24) de la bague de soutien (3).

17. Bague d'étanchéité (1) selon l'une des revendications précédentes, **caractérisée en ce qu'**un diamètre extérieur (25) de l'élément d'étanchéité (4) est plus grand qu'un diamètre extérieur (26) de la bague de soutien (3).

18. Bague d'étanchéité (1) selon l'une des revendications précédentes, **caractérisée en ce que** l'élément d'étanchéité (4) est formé à partir d'un élastomère réticulé, par exemple le caoutchouc naturel, le SBR, l'EPDM, le NBR et les ETP et présente une dureté de Shore comprise entre 40 ShA et 80 ShA, et de préférence entre 50 ShA et 60 ShA.

19. Bague d'étanchéité (1) selon l'une des revendications précédentes, **caractérisée en ce que** la bague de soutien (3) est formée à partir d'un matériau plastique, par exemple le PE, le PP, le PA, le PS, le polyester, le PEEK, les ETP ou un composite ou un caoutchouc dur à fibres de polymère et présente une dureté de Shore de 90 ShA à 80 SDh, et de préférence de 50 ShD.

20. Dispositif d'étanchéité (30), en particulier collier de réparation d'un joint à emboîtement enfichable (2), comprenant une bague d'étanchéité (1) agencée dans une rainure de logement (28) d'un raccord, par exemple un manchon ou un raccord d'armature, constituée de différents matériaux, en particulier de plastique, comprenant au moins une bague à lèvres d'écartement entourant une extrémité pointue d'une conduite (31) s'engageant dans le raccord de façon étanche, **caractérisé en ce que** la bague d'étanchéité (1) est réalisée selon l'une des revendications 1 à 19.
